# FASCICULE DE BREVET EUROPEEN

(11) **EP 4 540 070 B1**
(45) Date de publication et mention de la délivrance du brevet: **21.01.2026**
(21) Numéro de dépôt: 23728820.4
(22) Date de dépôt: 06.06.2023
(51) Int. Cl.: B60C 1/00, C08L 47/00, C08F 210/02

(54) **COMPOSITION DE CAOUTCHOUC COMPRENANT UN ÉLASTOMÈRE DIÉNIQUE FORTEMENT SATURÉ**
KAUTSCHUKZUSAMMENSETZUNG MIT EINEM HOCHGESÄTTIGTEN DIENELASTOMER
RUBBER COMPOSITION COMPRISING A HIGHLY SATURATED DIENE ELASTOMER

(30) Priorité: 14.06.2022 FR 2205727
(43) Date de publication de la demande: 23.04.2025
(73) Titulaire: COMPAGNIE GENERALE DES ETABLISSEMENTS MICHELIN, 63000 Clermont-Ferrand (FR)
(72) Inventeur: ARAUJO DA SILVA, José Carlos, 63040 CLERMONT-FERRAND CEDEX 09 (FR); PRAS, Maxime, 63040 CLERMONT-FERRAND CEDEX 09 (FR); FERRAND, Thomas, 63040 CLERMONT-FERRAND CEDEX 09 (FR); MAMMERI, Kahina, 63040 CLERMONT-FERRAND CEDEX 09 (FR)
(74) Mandataire: M.F.P. Michelin
(86) Numéro de dépôt international: PCT/EP2023/065125
(87) Numéro de publication internationale: WO 2023/242000

(56) Documents cités:
- FR-A1- 3 100 815
- FR-A1- 3 104 595
- FR-A3- 3 090 656

## Description

### Domaine technique

Le domaine de la présente invention est celui des compositions de caoutchouc à base d'élastomère diénique fortement saturé destinées à être utilisées dans un pneumatique, notamment dans sa bande de roulement.

### Technique antérieure

L'utilisation d'élastomère diénique fortement saturé est connue dans l'art antérieur. Récemment, la Demanderesse a décrit des copolymères d'éthylène et de 1,3-diene et leur application dans une bande de roulement d'un pneu dans les documents WO 2021/053296 A1 et WO2021/053051 A1.

Par ailleurs, dans le document WO2020128250A1, la Demanderesse a mis en évidence que l'association d'un système plastifiant spécifique à des copolymères fortement insaturés permet d'améliorer la performance d'adhérence du pneumatique, voire de décaler le compromis entre l'adhérence et la résistance au roulement.

Dans le domaine des plastifiants et en particulier des résines plastifiantes, certains documents de la Demanderesse mentionnent l'utilisation de résines de haute Tg à titre de plastifiants dans des compositions de caoutchouc pour pneumatiques à base d'un élastomère de type SBR afin de décaler l'équilibre existant entre diverses performances recherchées pour le pneu, parmi lesquelles la résistance à l'usure et l'adhésion sur sol humide. On peut par exemple citer le document WO2013/039498 A1.

Néanmoins, les manufacturiers de pneumatiques cherchent toujours des solutions pour améliorer les performances des pneus ou décaler l'équilibre de leurs propriétés. Dans le domaine discuté plus haut des pneus comprenant un élastomère diénique fortement saturé en bande de roulement, il existe toujours un besoin de disposer de compositions de caoutchouc qui confèrent au pneu des propriétés de résistance au roulement améliorées sans pénaliser les autres propriétés telles que l'adhérence sur le sol, en particulier sur un sol humide.

### Exposé de l'invention

La Demanderesse a trouvé une composition de caoutchouc qui permet de répondre à ce besoin dans le domaine d'application des élastomères diéniques fortement saturés aux compositions de caoutchouc pour le pneu et en particulier pour la bande de roulement. Tout particulièrement, la Demanderesse a trouvé une composition de caoutchouc qui associe l'utilisation d'un élastomère diénique fortement saturé à l'utilisation d'une résine de haute Tg, et qui confère au pneu, contre toute attente, de bonnes propriétés de résistance au roulement et un compromis de propriétés résistance au roulement / adhérence sur un sol humide décalé, notamment avec des propriétés d'adhérence sur sol humide améliorées par rapport à l'utilisation combinée d'un élastomère diénique de type SBR et d'une même résine de haute Tg.

Ainsi, un premier objet de l'invention est une composition de caoutchouc à base d'au moins
- une matrice élastomère comprenant majoritairement un élastomère diénique fortement saturé,
- une charge renforçante,
- un système de vulcanisation et
- un système plastifiant comprenant une résine de haute Tg.

Un autre objet de l'invention est un bandage pneumatique ou non-pneumatique qui comprend une composition de caoutchouc conforme à l'invention, de préférence dans sa bande de roulement.

### Résumé de l'invention

L'invention, décrite plus en détails ci-après, a pour objet au moins l'une des réalisations énumérées aux points suivants :
1. Composition de caoutchouc à base d'au moins
   - une matrice élastomère comprenant majoritairement un élastomère diénique fortement saturé, lequel élastomère diénique fortement saturé est un copolymère d'éthylène, d'un 1,3-diène de formule (I), CH₂=CR-CH=CH₂ (I) le symbole R représentant une chaîne hydrocarbonée ayant 3 à 20 atomes de carbone, et optionnellement d'un autre 1,3-diène, dans lequel les unités éthylène représentent au moins 50% en mole des unités monomères du copolymère,
   - une charge renforçante,
   - un système de vulcanisation et
   - un système plastifiant comprenant une résine hydrocarbonée de haute Tg (température de transition vitreuse), éventuellement hydrogénée, présentant
      - une Tg comprise entre 50°C et 120°C, la Tg étant mesurée selon la méthode normalisée décrite plus bas,
      - un taux de protons aliphatiques supérieur ou égal à 95%, le taux de proton aliphatique étant mesuré par RMN selon la méthode normalisée décrite plus bas, et
      - une masse molaire moyenne en nombre (Mn) inférieure à 800 g/mol, la Mn étant mesurée selon la méthode décrite plus bas.
2. Composition de caoutchouc selon la réalisation 1, dans laquelle les unités éthylène représentent au moins 50% et au plus 95% en mole des unités monomères du copolymère diénique fortement saturé.
3. Composition de caoutchouc selon l'une quelconque des réalisations précédentes, dans laquelle les unités éthylène représentent au moins 65% en mole des unités monomères du copolymère diénique fortement saturé, de préférence de 65% à 90% en mole des unités monomères du copolymère.
4. Composition de caoutchouc selon l'une quelconque des réalisations précédentes, dans laquelle, dans la formule (I), R représente une chaîne aliphatique.
5. Composition de caoutchouc selon l'une quelconque des réalisations précédentes, dans laquelle, dans la formule (I), R représente une chaîne hydrocarbonée ayant 6 à 16 atomes de carbone.
6. Composition de caoutchouc selon l'une quelconque des réalisations précédentes, dans laquelle, dans la formule (I), R représente une chaîne acyclique.
7. Composition de caoutchouc selon l'une quelconque des réalisations précédentes, dans laquelle, dans la formule (I), R représente une chaîne linéaire ou ramifiée.
8. Composition de caoutchouc selon l'une quelconque des réalisations précédentes, dans laquelle le 1,3-diène de formule (I) est le myrcène ou le β-farnésène.
9. Composition de caoutchouc selon l'une quelconque des réalisations précédentes, dans laquelle l'élastomère diénique fortement saturé est un terpolymère d'éthylène, d'un premier 1,3-diène de formule (I), CH₂=CR-CH=CH₂ (I) le symbole R représentant une chaîne hydrocarbonée ayant 3 à 20 atomes de carbone, et d'un deuxième 1,3-diène ayant 4 à 6 atomes de carbone.
10. Composition de caoutchouc selon l'une quelconque des réalisations précédentes, dans laquelle le deuxième 1,3-diène est le 1,3-butadiène ou l'isoprène, de préférence le 1,3-butadiène.
11. Composition de caoutchouc selon l'une quelconque des réalisations précédentes, dans laquelle le copolymère est un terpolymère d'éthylène, d'un 1,3-diène choisi parmi le myrcène et le β-farnésène, et de 1,3-butadiène.
12. Composition de caoutchouc selon l'une quelconque des réalisations précédentes, dans laquelle le copolymère est statistique.
13. Composition de caoutchouc selon l'une quelconque des réalisations précédentes, dans laquelle le taux de l'élastomère diénique fortement saturé dans la composition de caoutchouc varie dans un domaine allant de 60 à 100 pce, de préférence de 80 à 100 pce et de manière très préférentielle de 90 à 100pce.
14. Composition selon l'une quelconque des réalisations précédentes dans laquelle le taux de résine hydrocarbonée de haute Tg est compris dans un domaine allant de 20 à 120 pce, de préférence de 40 à 110 pce.
15. Composition selon l'une quelconque des réalisations précédentes dans laquelle la résine hydrocarbonée de haute Tg présente une Tg comprise entre 55°C et 110°C, plus préférentiellement entre 60°C et 100°C.
16. Composition selon l'une quelconque des réalisations précédentes dans laquelle la résine hydrocarbonée de haute Tg présente une Tg allant de 60°C à 90°C.
17. Composition selon l'une quelconque des réalisations précédentes dans laquelle la résine hydrocarbonée de haute Tg présente une masse molaire moyenne en nombre supérieure ou égale à 250 g/mol et inférieure ou égale à 600 g/mol, de préférence inférieure ou égale à 500 g/mol.
18. Composition selon l'une quelconque des réalisations précédentes dans laquelle la résine hydrocarbonée de haute Tg présente une valeur d'indice de polydispersité (IP = Mw/Mn) d'au plus 2,0, de préférence d'au plus 1,8.
19. Composition selon l'une quelconque des réalisations précédentes dans laquelle la résine hydrocarbonée de haute Tg présente un taux de proton aliphatique mesuré par RMN (méthode normalisée) d'au moins 97%.
20. Composition selon l'une quelconque des réalisations précédentes dans laquelle la résine hydrocarbonée de haute Tg présente un taux de proton aliphatique mesuré par RMN (méthode normalisée) d'au moins 99%.
21. Composition selon l'une quelconque des réalisations précédentes dans laquelle la résine hydrocarbonée de haute Tg présente un taux de proton aromatique inférieur 5%.
22. Composition selon la réalisation précédente dans laquelle la résine présente un taux de proton aromatique allant de 0% à 4%, de préférence de 0% à 2%.
23. Composition selon l'une quelconque des réalisations précédentes dans laquelle la résine de haute Tg présente un taux de proton éthylénique inférieur à 5%.
24. Composition selon l'une quelconque des réalisations précédentes dans laquelle la résine présente un taux de proton éthylénique inférieur ou égal à 3%.
25. Composition selon l'une quelconque des réalisations précédentes dans laquelle le système plastifiant comprend en outre au moins une huile plastifiante ou au moins une résine hydrocarbonée de Tg inférieure à 50°C, ou encore au moins une huile plastifiante et une résine hydrocarbonée de Tg inférieure à 50°C.
26. Composition selon l'une quelconque des réalisations précédentes dans laquelle le taux total de plastifiants constituant le système plastifiant est supérieur ou égal à 10 pce, de préférence compris dans un domaine allant de 10 à 120 pce.
27. Composition selon la réalisation précédente dans laquelle le taux total de plastifiants constituant le système plastifiant est compris dans un domaine allant de 20 à 120 pce, de préférence de 20 à 110 pce.
28. Composition selon l'une quelconque des réalisations précédentes dans laquelle la charge renforçante comprend au moins une silice, un noir de carbone ou un mélange de silice et de noir de carbone.
29. Composition selon l'une quelconque des réalisations précédentes dans laquelle la charge renforçante comprend une silice à titre de charge renforçante majoritaire.
30. Composition selon l'une quelconque des réalisations précédentes dans laquelle le taux de charge renforçante est compris dans un domaine allant de 5 à 200 pce, de préférence de 40 à 160 pce.
31. Composition selon l'une quelconque des réalisations précédentes dans laquelle le taux de silice est compris dans un domaine allant de 50 à 160 pce.
32. Bandage pneumatique ou non-pneumatique comprenant une composition selon l'une quelconque des réalisations précédentes.
33. Bandage pneumatique ou non-pneumatique selon la réalisation précédente comprenant une composition selon l'une quelconque des réalisations 1 à 32 dans tout ou partie de sa bande de roulement.

### Définitions

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, on entend par "l'ensemble des unités monomères de l'élastomère" ou "la totalité des unités monomères de l'élastomère" tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend une proportion massique de plus de 50% ; lorsque le composé représente 100% massique, il est également qualifié de "majoritaire".

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indication différente, comme c'est le cas dans les exemples présentés plus bas, les valeurs de température de transition vitreuse (Tg) décrite dans la présente sont mesurées de manière connue par DSC (Differential Scanning Calorimetry) selon la norme ASTM D3418 (1999).

### Description détaillée de l'invention

### 1 Matrice élastomère

Par " matrice élastomère ", on entend l'ensemble des élastomères de la composition.

Selon l'invention, la matrice élastomère comprend majoritairement au moins un élastomère diénique fortement saturé, à savoir un copolymère contenant des unités éthylène et des unités diéniques (ci-après dénommé " le copolymère ").

L'élastomère diénique fortement saturé, utile aux besoins de l'invention est un copolymère, de préférence statistique. On entend de manière connue par "copolymère statistique" un copolymère dans lequel la distribution séquentielle des unités monomères obéit à une loi statistique connue.

L'élastomère diénique fortement saturé, utile aux besoins de l'invention est un copolymère qui comprend des unités éthylène résultant de la polymérisation d'éthylène. De manière connue, l'expression " unité éthylène " fait référence au motif -(CH₂-CH₂)- résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère et au plus 95% en mole, plus préférentiellement au plus 90% en mole.

De préférence, l'élastomère diénique fortement saturé comprend au moins 65% molaire d'unité éthylène. Autrement dit, les unités éthylène représentent préférentiellement au moins 65% en mole de l'ensemble des unités monomères de l'élastomère diénique fortement saturé. De manière plus préférentielle, l'élastomère diénique fortement saturé comprend de 65% à 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'au moins un 1,3-diène comprend aussi des unités 1,3-diène résultant de la polymérisation d'au moins un 1,3-diène. De manière connue, l'expression " unité 1,3-diène " fait référence aux unités résultant de l'insertion du 1,3-diène et l'expression " unité 1,3-diène de formule (I)" fait référence aux unités résultant de l'insertion du 1,3-diène de formule (I).

Selon l'invention, le copolymère comprend outre des unités éthylène, des unités 1,3-diène de formule (I)

CH₂=CR-CH=CH₂ (I)

le symbole R représentant une chaîne hydrocarbonée ayant 3 à 20 atomes de carbone.

Dans la formule (I) du 1,3-diène, la chaîne hydrocarbonée représentée par le symbole R est une chaîne insaturée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée.

La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène de formule (I) est le myrcène ou le β-farnésène.

Selon un mode de réalisation préférentiel de l'invention, le 1,3-diène est le myrcène.

Selon un autre mode de réalisation préférentiel de l'invention, le 1,3-diène est le β-farnésène.

Selon l'un quelconque des modes de réalisation de l'invention, le 1,3-diene de formule (I) est soit un seul composé, c'est-à-dire un seul 1,3-diene de formule (I), soit un mélange de 1,3-dienes de formule (I), les 1,3-dienes du mélange se différenciant les uns des autres par le groupe représenté par le symbole R.

Selon des modes de réalisation de l'invention, le copolymère est constitué des unités éthylène et des unités 1,3-diène de formule (I).

Selon ces modes de réalisation de l'invention, préférentiellement le copolymère est un copolymère d'éthylène et de myrcène.

Selon ces modes de réalisation de l'invention, préférentiellement le copolymère est un copolymère d'éthylène et β-farnésène.

Selon d'autre modes de réalisation de l'invention, le copolymère est un terpolymère constitué des unités éthylène, des unités 1,3-diène de formule (I) et des unités d'un deuxième 1,3-diène comprenant de 4 à 6 atomes de carbone.

Le deuxième 1,3-diène est soit un seul composé c'est-à-dire un seul 1,3-diène ayant 4 à 6 atomes de carbone, soit un mélange de différents 1,3-diènes ayant 4 à 6 atomes de carbone. A titre de 1,3-diène ayant 4 à 6 atomes de carbone, on peut citer en particulier le 1,3-butadiène et l'isoprène. Le deuxième 1,3-diène est préférentiellement le 1,3- butadiène.

Selon ces modes de réalisation de l'invention, en particulier lorsque le deuxième 1,3-diène est le 1,3-butadiène ou un mélange de 1,3-butadiène et d'au moins un autre 1,3-diène, le copolymère peut contenir en outre des motifs 1,2-cyclohexanediyle. La présence de ces structures cycliques dans le copolymère résulte d'une insertion très particulière de l'éthylène et de 1,3-butadiène lors de la polymérisation. La teneur en motifs 1,2-cyclohexanediyle dans le copolymère varie selon les teneurs respectives en éthylène et en 1,3-butadiène dans le copolymère. Le copolymère contient de préférence moins de 15% en mole d'unités de motif 1,2-cyclohexanediyle.

Selon ces modes de réalisation de l'invention, préférentiellement le copolymère est un terpolymère d'éthylène, de 1,3-butadiène et de myrcène.

Selon ces modes de réalisation de l'invention, préférentiellement le copolymère est un terpolymère d'éthylène, de 1,3-butadiène et β-farnésène.

Selon l'un quelconque des modes de réalisation de l'invention, le copolymère est avantageusement un copolymère statistique.

Des copolymères utiles aux besoins de l'invention sont décrits dans les documents WO2021/053296 A1 et WO2021/053051A1 au nom de la Demanderesse.

L'élastomère diénique fortement saturé utile aux besoins de l'invention, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques spécifiques à la synthèse des copolymères utiles à l'invention sont décrits dans les documents WO2021/053296 A1 et WO2021/053051A1 au nom de la Demanderesse. L'élastomère diénique fortement saturé est statistique selon un mode de réalisation de l'invention.

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Selon l'invention, le taux de l'élastomère diénique fortement saturé dans la composition de caoutchouc est de préférence d'au moins 50 parties en poids pour cent parties d'élastomère de la composition de caoutchouc (pce). De préférence encore, le taux de l'élastomère diénique fortement saturé dans la composition de caoutchouc varie dans un domaine allant de 60 à 100 pce, préférentiellement 80 à 100 pce. De manière plus préférentielle, il varie dans un domaine allant de 90 à 100 pce.

A titre complémentaire, la matrice élastomère de la composition de l'invention peut comprendre au moins un autre élastomère, à titre minoritaire. Notons en particulier les élastomères diéniques connus de l'homme du métier pour leur utilisation dans le domaine des pneumatiques, tels qu'un polybutadiène (en abrégé "BR"), un polyisoprène (IR) de synthèse, du caoutchouc naturel (NR), un copolymère de butadiène comme un copolymère de butadiène-styrène (SBR), un copolymère d'isoprène et les mélanges de ces élastomères.

### 2 Système Plastifiant

### Résine de haute Tg

La composition de l'invention comprend au moins une résine hydrocarbonée présentant une Tg comprise entre 50 °C et 120°C, dite à "haute Tg", et une masse molaire moyenne en nombre (Mn) inférieure ou égale à 800 g/mol.

De préférence, la résine plastifiante hydrocarbonée de haute Tg présente au moins une quelconque des caractéristiques suivantes :
- une Tg comprise dans un domaine allant de 55°C à 110°C, plus préférentiellement de 60°C à 100°C, et plus préférentiellement encore de 60°C à 90°C;
- une masse molaire moyenne en nombre (Mn) supérieure ou égale à 150 g/mol, de préférence supérieure ou égale à 250 g/mol et inférieure ou égale à 600 g/mol, plus préférentiellement supérieure ou égale à 250 g/mol et inférieure ou égale à 500 g/mol ;
- une valeur d'indice de polydispersité (IP = Mw/Mn) d'au plus 3.0, de préférence d'au plus 2.0, préférentiellement d'au plus 1,8.

Plus préférentiellement, cette résine plastifiante hydrocarbonée de haute Tg présente l'ensemble des caractéristiques préférentielles ci-dessus.

La Tg est mesurée selon la norme ASTM D3418 (1999). La macrostructure (Mw, Mn et IP) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées selon l'invention peuvent être aliphatiques ou encore du type mixte aliphatique/ aromatique, c'est-à-dire que les résines hydrocarbonées selon l'invention comprennent des unités constitutionnelles aliphatiques ou encore des unités constitutionnelles aliphatiques et des unités constitutionnelles aromatiques. Elles peuvent être naturelles ou synthétiques, à base ou non de pétrole.

Les résines hydrocarbonées selon l'invention peuvent être issues de la polymérisation d'un ou plusieurs monomères parmi les monomères aromatiques et les monomères aliphatiques. Les résines hydrocarbonées peuvent avoir subi une hydrogénation partielle ou totale à l'issue de la polymérisation.

Selon des modes de réalisation, la résine plastifiante hydrocarbonée de haute Tg selon l'invention est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C₅, les résines d'homopolymères ou copolymères du styrène, les résines d'homopolymères ou copolymères de coupe C₉ (ou plus généralement d'une coupe C₈ à C₁₀), et les mélanges de ces résines. Le terme "terpène" regroupe ici de manière connue les monomères alpha-pinène, beta- pinène et limonène.

Selon un mode de réalisation de l'invention, la résine hydrocarbonée de haute Tg présente un taux de proton aliphatique d'au moins 97%. Selon un mode de réalisation particulier de l'invention, la résine hydrocarbonée de haute Tg présente un taux de proton aliphatique d'au moins 99%.

Selon l'un quelconque des modes de réalisation, la résine hydrocarbonée utile aux besoins de l'invention présente préférentiellement un taux de proton aromatique inférieur à 5%, de préférence compris dans un domaine allant de 0% à 4%, de préférence de 0% à 2%.

Selon l'un quelconque des modes de réalisation, la résine hydrocarbonée utile aux besoins de l'invention présente préférentiellement un taux de proton éthylénique inférieur à 5%, de préférence compris dans un domaine allant de 0% à 3%.

Le taux de proton aromatique (%HA) et le taux de proton éthylénique (%HE) sont mesurés par RMN ¹ H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl₃) à raison d'environ 10mg de résine dans environ 1 mL de solvant. Les spectres sont acquis sur un spectromètre Avance 500 MHz Bruker équipé d'une sonde "large bande" BBO z- grad 5 mm Bruker. L'expérience RMN ¹ H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; δppm ¹ H à 7,20 ppm. Les signaux RMN ¹ H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

Des résines utilisables dans le cadre de l'invention sont disponibles commercialement, par exemple vendues par la société Kolon Industries sous la dénomination " SU-640 " (Tg = 83°C, 100% aliphatique, Mn 398g/mol).

Selon l'un quelconque des modes de réalisation de l'invention, le taux de résine plastifiante hydrocarbonée de haute Tg est avantageusement supérieur ou égal à 10 pce, de préférence compris dans un domaine allant de 10 pce à 120 pce, préférentiellement de 20 pce à 120 pce, plus préférentiellement encore de 20 à 110 pce.

La résine plastifiante hydrocarbonée de haute Tg peut être un mélange de plusieurs résines plastifiantes hydrocarbonées de haute Tg telles que décrites plus haut.

Le système plastifiant selon l'invention peut comprendre outre la résine plastifiante hydrocarbonée de haute Tg, au moins une huile plastifiante ou au moins une résine hydrocarbonée de Tg inférieure à 50°C, ou encore au moins une huile plastifiante et une résine hydrocarbonée de Tg inférieure à 50°C. Ces plastifiants sont bien connus de l'homme du métier et disponibles commercialement.

Le taux total de plastifiants (résine plastifiante hydrocarbonée de haute Tg, huile plastifiante, résine hydrocarbonée de Tg inférieure à 50°C) constituant le système plastifiant est supérieur ou égal à 10 pce, de préférence compris dans un domaine allant de 10 à 120 pce. Selon certains modes le taux total de plastifiants constituant le système plastifiant est compris dans un domaine allant de 20 à 120 pce, de préférence compris dans un domaine allant de 20 à 110 pce.

### 3 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge. Plus particulièrement, la charge renforçante comprend au moins une silice, un noir de carbone ou un mélange de silice et de noir de carbone.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil 7000" et "Ultrasil 7005" de la société Degussa, les silices "Zeosil" 1165MP, 1135MP et 1115MP de la société Solvay, la silice "Hi-Sil EZ150G" de la société PPG, les silices "Zeopol" 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La composition selon l'invention peut optionnellement également contenir des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité de la composition, d'améliorer sa faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables. On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Dans la composition de caoutchouc conforme à l'invention, la teneur en agent de couplage est préférentiellement comprise entre 1 et 20 pce. Typiquement le taux d'agent de couplage représente de 0,5% à 15% en poids par rapport à la quantité de charge inorganique renforçante .

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge renforçante totale (noir de carbone et/ou charge inorganique renforçante telle que silice) est de 5 à 200 pce, plus préférentiellement de 40 à 160 pce. En dessous de 5 pce de charge, la composition pourrait ne pas être suffisamment renforcée tandis qu'au-dessus de 200 pce de charge, la composition pourrait être moins performante en résistance au roulement.

De préférence, on utilise la silice comme charge majoritaire, de préférence, selon un taux allant de 50 à 160 pce, plus préférentiellement de 60 à 150 pce, et, optionnellement, du noir de carbone. Le noir de carbone, lorsqu'il est présent, est alors utilisé de manière minoritaire, de préférence à un taux compris dans un domaine allant de 0,1 à 10 pce, plus préférentiellement de 0,5 à 10 pce, notamment de 1 à 5 pce.

### 4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,2 pce et 10 pce, plus préférentiellement entre 0,3 et 5 pce. L'accélérateur ou le mélange d'accélérateurs de vulcanisation est utilisé à un taux préférentiel compris entre 0,5 et 10 pce, plus préférentiellement compris entre 0,5 et 5 pce.

On peut utiliser comme accélérateur, tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### 5 Additifs possibles

La composition de caoutchouc selon l'invention peut comporter optionnellement également tout ou partie des additifs usuels habituellement utilisés dans les compositions d'élastomères pour pneumatique, des pigments, des agents de protection tels que cires anti-ozone, anti-ozonants chimiques, anti-oxydants, des agents anti-fatigue, des résines renforçantes (telles que décrites par exemple dans la demande WO 02/10269).

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### 6 Préparation de la composition de caoutchouc

La composition conforme à l'invention peut être fabriquée dans des mélangeurs appropriés, en utilisant deux phases de préparation successives bien connues de l'homme du métier :
- une première phase de travail ou malaxage thermomécanique (phase dite " non-productive "), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite " productive "), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases sont amplement connues de l'homme du métier.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

### 7 Pneumatique

La présente invention a également pour objet un bandage pneumatique ou non-pneumatique comprenant une composition de caoutchouc selon l'invention.

De préférence, la composition selon l'invention est présente au moins dans la bande de roulement du bandage pneumatique ou non-pneumatique selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION DE L'INVENTION

### 1 Tests et mesures :

### 1-1 Détermination de la microstructure des élastomères :

La microstructure des élastomères est déterminée par analyse RMN ¹H, suppléée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500,43 MHz pour l'observation du proton et
125,83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl₃). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl₃). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets "Overhauser Nucléaire" (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

### 1-2 Détermination de la viscosité Mooney

La viscosité Mooney ML(1+4) à 100 °C est mesurée selon la norme ASTM D 1646.

Un consistomètre oscillant est utilisé tel que décrit dans la norme ASTM D 1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

### 1-3 Mesure des propriétés dynamiques :

### Propriétés dynamiques

Les propriétés dynamiques tan(δ)max sont mesurées sur un viscoanalyseur (Metravib V A4000), selon la norme ASTM D5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz. On effectue un balayage en température de -80°C à +100°C avec une rampe de +1,5°C/min, sous une contrainte de 0,7 MPa.

L'hystérèse en température est déterminée en prenant l'intégrale de l'angle de perte (tan(δ)) dans l'intervalle [-30°C ; 0°C] sur un balayage en température à une contrainte imposée de 0,7MPa. Cette mesure est un descripteur de l'adhérence du pneu sur le sol mouillé ou humide. La valeur en base 100 est calculée selon l'opération : (valeur de l'intégrale de l'angle de perte dans l'intervalle [-30°C ; 0°C] de l'échantillon / valeur de l'intégrale de l'angle de perte dans l'intervalle [-30°C ; 0°C] du témoin) * 100. De cette façon, une valeur plus basse représente une diminution de la performance en adhérence sur sol mouillé (c'est-à-dire une valeur de l'intégrale de l'angle de perte dans l'intervalle [-30°C ; 0°C] plus faible) tandis qu'une valeur plus élevée représente une meilleure performance en adhérence sur sol mouillé (c'est-à-dire une valeur de l'intégrale de l'angle de perte dans l'intervalle [-30°C ; 0°C] plus élevée).

L'hystérèse en déformation est déterminée en prenant la valeur maximale de l'angle de perte (tan(δ)max) sur un balayage retour à partir d'un balayage en déformation à 23°C allant de 0,01% à 100% de déformation crête-crête à 10Hz. Cette mesure est un descripteur de l'hystérèse et donc une indication de la propriété de résistance au roulement du pneu. La valeur en base 100 est calculée selon l'opération : (valeur de tan(δ)max à 23°C du témoin / valeur de tan(δ)max à 23°C de l'échantillon) * 100. De cette façon, une valeur plus basse représente une diminution de la performance en hystérèse (c'est-à-dire une augmentation de l'hystérèse) tandis qu'une valeur plus élevée représente une meilleure performance en hystérèse (c'est-à-dire une hystérèse plus faible).

### 2 Préparation des compositions de caoutchouc :

Les compositions de caoutchouc dont le détail de la formulation figure dans le tableau 5, ont été préparées de la manière suivante :
On introduit l'élastomère dans un mélangeur interne (taux de remplissage final : environ 70% en volume), dont la température initiale de cuve est d'environ 90°C. Lorsque la température atteint 100°C, on introduit la moitié de la silice et de la résine, ainsi que le noir de carbone et l'agent de couplage. L'autre moitié de la silice et de la résine, l'huile ainsi que les divers autres ingrédients à l'exception du soufre et des accélérateurs de vulcanisation, sont introduites à 120°C. On conduit alors un travail thermomécanique (phase non-productive) en une étape, qui dure au total environ 3 à 4 min, jusqu'à atteindre une température maximale de " tombée " de 160°C. On récupère le mélange ainsi obtenu, on le refroidit puis on incorpore le soufre et les accélérateurs de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

### 2.a Préparation des élastomères diéniques fortement saturés

Les élastomères diéniques fortement saturés sont préparés selon les modes opératoires suivants :

### (i) Synthèse d'un copolymère d'éthylène et de myrcène : élastomère E1

Le polymère est synthétisé selon le mode opératoire suivant :
Dans un réacteur contenant à 80° C du méthylcyclohexane, de l'éthylène et du myrcène (My) dans les proportions indiquées dans le tableau 1, on ajoute du butyloctylmagnésium (BOMAG) pour neutraliser les impuretés du réacteur, puis le système catalytique (cf tableau 1 ). A ce moment, la température de réaction est régulée à 80° C et la réaction de polymérisation démarre. La réaction de polymérisation se déroule à une pression constante de 8 bars. Le réacteur est alimenté tout au long de la polymérisation en éthylène et en myrcène dans les proportions définies dans le tableau. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le [Me₂Si(Flu)_{z}Nd( *µ* -BH₄)₂Li(THF)], d'un co-catalyseur, le butyloctylmagnésium (BOMAG), et d'un monomère de préformation, le 1,3-butadiène, dans les teneurs indiquées dans le tableau. Il est préparé selon une méthode de préparation conforme au paragraphe II.1 de la demande de brevet WO 2017093654 A1.

**Tableau 1**

| **Synthèse** | **Concentration métallocène (mmol/L)** | **Concentration agent alkylant (mmol/L)** | **Ratio molaire monomère préformation/métal Nd** | **Alimentation (Ethy/Myrcène) (%mol)** |
|---|---|---|---|---|
| E1 | 0.04 | 0.2 | 90 | 65/35 |

### (ii) Synthèse d'un copolymère éthylène/butadiène/myrcène : élastomère E2

Un copolymère E2 est synthétisé selon le mode opératoire suivant :
Dans un réacteur contenant à 80° C du méthylcyclohexane, de l'éthylène du 1,3-butadiene et du myrcène (Myr) dans les proportions indiquées dans le tableau 5, on ajoute du butyloctylmagnésium (BOMAG) pour neutraliser les impuretés du réacteur, puis le système catalytique (cf tableau 3). A ce moment, la température de réaction est régulée à 80° C et la réaction de polymérisation démarre. La réaction de polymérisation se déroule à une pression constante de 8 bars. Le réacteur est alimenté tout au long de la polymérisation en éthylène, 1,3-butadiene et en myrcène dans les proportions définies dans le tableau 5. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le [Me₂Si(Flu)₂Nd( *µ* -BH₄)₂Li(THF)], d'un co-catalyseur, le butyloctylmagnésium (BOMAG), et d'un monomère de préformation, le 1,3-butadiène, dans les teneurs indiquées dans le tableau 5. Il est préparé selon une méthode de préparation conforme au paragraphe II.1 de la demande de brevet WO 2017093654 A1.

**Tableau 2**

| **Synthèse** | **Concentration métallocène (mmol/L)** | **Concentration agent alkylant (mmol/L)** | **Ratio molaire monomère préformation/métal Nd** | **Alimentation (Ethy/Btd/Myrcène) (%mol)** |
|---|---|---|---|---|
| E2 | 0.09 | 0.4 | 90 | 67.9/6.6/25.5 |

### (iii) Synthèse d'un copolymère éthylène/butadiène/farnésène : élastomère E3

Le polymère est synthétisé selon le mode opératoire suivant :
Dans un réacteur contenant à 80° C du méthylcyclohexane, de l'éthylène du 1,3-butadiène et du *β* -farnésène (Far) dans les proportions indiquées dans le tableau 2, on ajoute du butyloctylmagnésium (BOMAG) pour neutraliser les impuretés du réacteur, puis le système catalytique (cf tableau 2). A ce moment, la température de réaction est régulée à 80° C et la réaction de polymérisation démarre. La réaction de polymérisation se déroule à une pression constante de 8 bars. Le réacteur est alimenté tout au long de la polymérisation en éthylène, 1,3-butadiène et en *β* -farnésène dans les proportions définies dans le tableau 4. La réaction de polymérisation est stoppée par re-froidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le [Me₂Si(Flu)₂Nd( *µ* -BH₄)₂Li(THF)], d'un co-catalyseur, le butyloctylmagnésium (BOMAG), et d'un monomère de préformation, le 1,3-butadiène, dans les teneurs indiquées dans le tableau 2. Il est préparé selon une méthode de préparation conforme au paragraphe II.1 de la demande de brevet WO 2017093654 A1.

**Tableau 3**

| **Synthèse** | **Concentration métallocène (mmol/L)** | **Concentration agent alkylant (mmol/L)** | **Ratio molaire monomère préformation/métal Nd** | **Alimentation (Ethy/Btd/Farnésène) (%mol)** |
|---|---|---|---|---|
| E3 | 0.09 | 0.25 | 90 | 81/9/10 |

Caractéristiques physico-chimique des élastomères diéniques fortement saturés :

**Tableau 4**

| Elastomère | Eth | Btd | cycle | Far ou Myr | 1.4 | 1.2 | 3.4 | Mn (g/mol) |
|---|---|---|---|---|---|---|---|---|
| E1 | 75 | | | 25 | 7 | 1 | 17 | 259000 |
| E2 | 71 | 10 | 3 | 16 | 6 | | 10 | 205000 |
| E3 | 76 | 8 | 5 | 11 | 4 | | 7 | 200800 |

**Tableau 5**

| | **T1** | **C1** | **C2** | **T2** | **C3** | **C4** |
|---|---|---|---|---|---|---|
| Elastomère (1) | 100 | 100 | 100 | | | |
| Elastomère (2) | | | | 100 | 100 | 100 |
| Noir de Carbone (6) | 2 | 2 | 2 | 2 | 2 | 2 |
| Silice (7) | 96 | 96 | 96 | 96 | 96 | 96 |
| Silane (8) | 8 | 8 | 8 | 8 | 8 | 8 |
| Plastifiant (9) | 15 | 15 | 15 | 15 | 15 | 15 |
| Résine (10) | 30 | | | 30 | | |
| Résine (11) | | 30 | | | 30 | |
| Résine (12) | | | 30 | | | 30 |
| DPG (13) | 2.1 | 2.1 | 2.1 | 2.1 | 2.1 | 2.1 |
| Cire Ozone (14) | 2.6 | 2.6 | 2.6 | 2.6 | 2.6 | 2.6 |
| 6PPD (15) | 3.8 | 3.8 | 3.8 | 3.8 | 3.8 | 3.8 |
| TMQ (16) | 1.6 | 1.6 | 1.6 | 1.6 | 1.6 | 1.6 |
| Acide stéarique (17) | 3 | 3 | 3 | 3 | 3 | 3 |
| ZnO (18) | 1 | 1 | 1 | 1 | 1 | 1 |
| CBS (19) | 2.3 | 2.3 | 2.3 | 2.3 | 2.3 | 2.3 |
| Soufre | 0.9 | 0.9 | 0.9 | 0.9 | 0.9 | 0.9 |

| | | | | | | |
|---|---|---|---|---|---|---|
| *1. Elastomère SBR : 27% poids styrène et 24%mol par rapport à la partie diénique de motifs 1,2-butadiène, avec un Mooney ML(1+4) à 100°C de 54 et une Tg=-48°C* *2.Elastomère SBR : 16% poids styrène et 24%mol par rapport à la partie diénique de motifs 1,2-butadiène, avec un Mooney ML(1+4) à 100°C de 70 et une Tg=-65°C* | | | | | | |

**Tableau 6**

| | **T3** | **C5** | **C6** | **T4** | **C7** | **C8** | **T5** | **C9** | **C10** |
|---|---|---|---|---|---|---|---|---|---|
| Elastomère E1 (3) | **100** | **100** | **100** | | | | | | |
| Elastomère E2 (4) | | | | **100** | **100** | **100** | | | |
| Elastomère E3 (5) | | | | | | | **100** | **100** | **100** |
| Noir de Carbone (6) | 2 | 2 | 2 | 2 | 2 | 2 | 2 | 2 | 2 |
| Silice (7) | 96 | 96 | 96 | 96 | 96 | 96 | 96 | 96 | 96 |
| Silane (8) | 8 | 8 | 8 | 8 | 8 | 8 | 8 | 8 | 8 |
| Plastifiant (9) | 15 | 15 | 15 | 15 | 15 | 15 | 15 | 15 | 15 |
| Résine (10) | 30 | | | 30 | | | 30 | | |
| Résine (11) | | 30 | | | 30 | | | 30 | |
| Résine (12) | | | **30** | | | **30** | | | **30** |
| DPG (13) | 2.1 | 2.1 | 2.1 | 2.1 | 2.1 | 2.1 | 2.1 | 2.1 | 2.1 |
| Cire Ozone (14) | 2.6 | 2.6 | 2.6 | 2.6 | 2.6 | 2.6 | 2.6 | 2.6 | 2.6 |
| 6PPD (15) | 3.8 | 3.8 | 3.8 | 3.8 | 3.8 | 3.8 | 3.8 | 3.8 | 3.8 |
| TMQ (16) | 1.6 | 1.6 | 1.6 | 1.6 | 1.6 | 1.6 | 1.6 | 1.6 | 1.6 |
| Acide stéarique (17) | 3 | 3 | 3 | 3 | 3 | 3 | 3 | 3 | 3 |
| ZnO (18) | 1 | 1 | 1 | 1 | 1 | 1 | 1 | 1 | 1 |
| CBS (19) | 2.3 | 2.3 | 2.3 | 2.3 | 2.3 | 2.3 | 2.3 | 2.3 | 2.3 |
| Soufre | 0.9 | 0.9 | 0.9 | 0.9 | 0.9 | 0.9 | 0.9 | 0.9 | 0.9 |

| | | | | | | | | | |
|---|---|---|---|---|---|---|---|---|---|
| *3. Elastomère E1 : copolymère éthylène*/*myrcène présentant un taux d'éthylène de 75% molaire, et un taux de myrcène de 25% molaire avec un Mooney ML(1+4) à 100°C de 56 et une Tg -63°C, Mn de 259000g*/*mol* *4. Elastomère E2 : terpolymère éthylène*/*butadiène*/*myrcène présentant un taux d'éthylène de 71% molaire, un taux de myrcène de 16% molaire, et un taux de butadiène de 13%mol dont 3%mol de cycle avec un Mooney ML(1+4) à 100°C de 34 et une Tg -57°C, de Mn de 205000g*/*mol* *5. Elastomère E3 : terpolymère éthylène*/*butadiène*/*farnésène présentant un taux d'éthylène de 76% molaire, un taux de farnésène de 11% molaire, et un taux de butadiène de 13%mol dont 5%mol de cycle avec une Tg -61°C, de Mn de 200800g*/*mol* *6. Noir ASTM N234 de la société CABOT* *7. "Zeosil 1165 MP" de Solvay-Rhodia sous forme de microperles* *8. Silane liquide triethoxysilylpropyltetrasulfure (TESPT) « Si69 » de la société Evonik* *9. Trioctyl phosphate (tri-2-ethylhexyl phosphate) « Disflamoll TOF » de la société Lanxess(Tg = -110°C)* *10. Résine Escorez 5600 de la société Exxon Mobil (Tg = 55°C, 90% aliphatique, Mn 500g*/*mol)* *11. Résine « R2495 » du fournisseur PINOVA (Tg = 93°C, 96% aliphatique, Mn 869g*/*mol)* *12. Résine « SU-640 » de la société Kolon Industries (Tg = 83°C, 100% aliphatique, Mn 398g*/*mol)* *13. Diphénylguanidine « Perkacit DPG » de la société Flexsys* *14. Cire anti-ozone « VARAZON 4959 » de la société Sasol Wax* *15. Santoflex 6PPD de la société FLEXSYS* *16. 2,2,4-trimethyl-1,2-dihydroquinoline (TMQ) de la société Lanxess* *17. Acide stéarique « Pristerene 4931 » de la société Uniqema* *18. Oxyde de Zinc de grade industriel de la société Umicore* *19. N-cyclohexyl-2-benzothiazol-sulfénamide « Santocure CBS » de la société Flexsys* | | | | | | | | | |

Les caractéristiques des résines, ingrédients 10 à 12 sont exposées dans le tableau 7.

**Tableau 7**

| **Nom** | **Tg** | **Mn** | **IP** | **% Aliphatique** | **% Aromatique** | **% Ethylène** |
|---|---|---|---|---|---|---|
| Escorez 5600 **résine (10)** | 55°C | 500g/mol | 1.6 | 90% | 10% | - |
| R2495 **résine (11)** | 93°C | 869g/mol | 1.32 | 96% | 1% | 3% |
| SU-640 **résine (12)** | 83°C | 398g/mol | 1.65 | 100% | - | - |

### 3 Résultats :

Les résultats des compositions à base de SBR figurent dans le tableau 8.

**Tableau 8**

| | **T1** | **C1** | **C2** | **T2** | **C3** | **C4** |
|---|---|---|---|---|---|---|
| **Récapitulatif des composants élastomères et résines** | | | | | | |
| SBR (1) | 100 | 100 | 100 | | | |
| SBR (2) | | | | 100 | 100 | 100 |
| Résine (10) | 30 | | | 30 | | |
| Résine (11) | | 30 | | | 30 | |
| Résine (12) | | | 30 | | | 30 |

| **Résultats** | | | | | | |
|---|---|---|---|---|---|---|
| tan(δ)max retour à 10Hz à 23°C | **100** | **91** | **105** | **100** | **90** | **106** |
| Int tan(δ) [-30°C ; 0°C] | **100** | **93** | **87** | **100** | **98** | **91** |

Les résultats des compositions à base de copolymère d'éthylène figurent dans le tableau 5.

**Tableau 9**

| | **T3** | **C5** | **C6 (invention)** | **T4** | **C7** | **C8 (invention)** | **T5** | **C9** | **C10 (invention)** |
|---|---|---|---|---|---|---|---|---|---|
| **Récapitulatif des composants élastomères et résines** | | | | | | | | | |
| Elastomère E1 | **100** | **100** | **100** | | | | | | |
| Elastomère E2 | | | | **100** | **100** | **100** | | | |
| Elastomère E3 | | | | | | | **100** | **100** | **100** |
| Résine (10) | 30 | | | 30 | | | 30 | | |
| Résine (11) | | 30 | | | 30 | | | 30 | |
| Résine (12) | | | **30** | | | **30** | | | **30** |

| **Résultats** | | | | | | | | | |
|---|---|---|---|---|---|---|---|---|---|
| Tanδmax Retour 10Hz 23°C | 100 | 95 | 103 | 100 | 98 | 108 | 100 | 100 | 109 |
| Int. Tan(δ) [-30°C ; 0°C] | 100 | 108 | 104 | 100 | 105 | 107 | 100 | 110 | 103 |

Les résultats montrent que la composition conforme à l'invention, avec une matrice élastomère à base d'un copolymère d'éthylène et une résine haute Tg à fort taux de protons d'aliphatiques, permet contre toute attente de fortement améliorer la performance d'hystérèse (résistance au roulement) tout en améliorant l'adhérence sur sol mouillé.

La performance d'adhérence sur sol mouillé est dégradée pour les compositions dont la matrice élastomère est à base de SBR de Tg = -48°C ou de Tg = -65°C, associée à une résine haute Tg à fort taux de protons d'aliphatiques (comparaison de C2 par rapport à T1 et C1 et C4 par rapport à T2 et C3).

Les résultats montrent également que lorsque la résine de haute Tg ne présente pas l'ensemble des caractéristiques requises notamment en termes de Mn (Résine 11), lorsque la matrice élastomère est à base d'un copolymère d'éthylène, il n'y a pas d'amélioration en performance d'hystérèse et le compromis adhérence sur sol mouillé / hystérèse est dégradé par rapport une composition comprenant une résine de haute Tg conforme à l'invention et une matrice élastomère à base d'un copolymère d'éthylène (comparaison de C5 par rapport à T3 vs C6 selon l'invention; comparaison de C7 par rapport à T4 vs C8 selon l'invention et comparaison de C9 par rapport à T5 vs C10 selon l'invention).

## Revendications

1. Composition de caoutchouc à base d'au moins
- une matrice élastomère comprenant majoritairement un élastomère diénique fortement saturé, lequel élastomère diénique fortement saturé est un copolymère d'éthylène et d'un 1,3-diène de formule (I),
CH₂=CR-CH=CH₂ (I)
le symbole R représentant une chaîne hydrocarbonée ayant 3 à 20 atomes de carbone,
et optionnellement d'un autre 1,3-diène, dans lequel les unités éthylène représentent au moins 50% en mole des unités monomères du copolymère,
- une charge renforçante,
- un système de vulcanisation et
- un système plastifiant comprenant une résine hydrocarbonée de haute Tg (température de transition vitreuse), éventuellement hydrogénée, présentant
- une Tg comprise entre 50°C et 120°C mesurée selon la norme ASTM D3418 (1999),
- un taux de proton aliphatique supérieur ou égal à 95% mesurés par RMN ¹ H dans les conditions définies au paragraphe « 2 - Système Plastifiant », et
- une masse molaire moyenne en nombre (Mn) inférieure ou égale à 800 g/mol mesurée par chromatographie d'exclusion stérique (SEC) dans les conditions définies au paragraphe « 2 - Système Plastifiant ».

2. Composition de caoutchouc selon la revendication 1, dans laquelle les unités éthylène représentent au moins 50% et au plus 95% en mole des unités monomères du copolymère, de préférence de 65% à 90%.

3. Composition de caoutchouc selon l'une quelconque des revendications précédentes, dans laquelle dans la formule (I), R représente une chaîne hydrocarbonée aliphatique ayant 6 à 16 atomes de carbone.

4. Composition de caoutchouc selon l'une quelconque des revendications précédentes, dans laquelle le 1,3-diène de formule (I) est le myrcène ou le β- farnésène.

5. Composition de caoutchouc selon l'une quelconque des revendications précédentes, dans laquelle l'élastomère diénique fortement saturé est un terpolymère d'éthylène, d'un premier 1,3-diène de formule (I), CH₂=CR-CH=CH₂ (I) le symbole R représentant une chaîne hydrocarbonée ayant 3 à 20 atomes de carbone, et d'un deuxième 1,3-diène ayant 4 à 6 atomes de carbone.

6. Composition de caoutchouc selon la revendication précédente, dans laquelle le deuxième 1,3-diène est le 1,3-butadiène ou l'isoprène, de préférence le 1,3-butadiène.

7. Composition de caoutchouc selon la revendication précédente, dans laquelle l'élastomère diénique fortement saturé est un terpolymère d'éthylène, d'un 1,3-diène choisi parmi le myrcène et le β- farnésène, et de 1,3-butadiène.

8. Composition de caoutchouc selon l'une quelconque des revendications précédentes, dans laquelle le taux de l'élastomère diénique fortement saturé varie dans un domaine allant de 60 à 100 pce, de préférence de 80 à 100 pce, de manière très préférentielle de 90 à 100 pce.

9. Composition selon l'une quelconque des revendications précédentes dans laquelle le taux de résine hydrocarbonée de haute Tg est compris dans un domaine allant de 10 à 120 pce, de préférence de 20 à 110 pce.

10. Composition selon l'une quelconque des revendications précédentes dans laquelle la résine hydrocarbonée de haute Tg présente une Tg comprise entre 55°C et 110°C, plus préférentiellement entre 60°C et 100°C.

11. Composition selon l'une quelconque des revendications précédentes dans laquelle la résine hydrocarbonée de haute Tg présente une masse molaire moyenne en nombre supérieure ou égale à 250 g/mol et inférieure ou égale à 600 g/mol.

12. Composition selon l'une quelconque des revendications précédentes dans laquelle la résine hydrocarbonée de haute Tg présente un taux de proton aliphatique mesuré par RMN (méthode normalisée) d'au moins 99%.

13. Composition selon l'une quelconque des revendications précédentes dans laquelle la charge renforçante comprend une silice à titre de charge renforçante majoritaire.

14. Composition selon l'une quelconque des revendications précédentes dans laquelle le taux de silice est compris dans un domaine allant de 50 à 160 pce.

15. Bandage pneumatique ou non-pneumatique comprenant une composition selon l'une quelconque des revendications précédentes.

## Patentansprüche

1. Kautschukzusammensetzung auf Basis von mindestens
- einer Elastomermatrix, die hauptsächlich ein hochgesättigtes Dienelastomer umfasst, wobei es sich bei dem hochgesättigten Dienelastomer um ein Copolymer von Ethylen und einem 1,3-Dien der Formel (I),
CH₂=CR-CH=CH₂ (I)
wobei das Symbol R für eine Kohlenwasserstoffkette mit 3 bis 20 Kohlenstoffatomen steht,
und gegebenenfalls einem weiteren 1,3-Dien handelt, in dem die Ethyleneinheiten mindestens 50 Mol-% der Monomereinheiten des Copolymers ausmachen,
- einem verstärkenden Füllstoff,
- einem Vulkanisationssystem,
- einem Weichmachersystem, umfassend ein gegebenenfalls hydriertes Harz auf Kohlenwasserstoffbasis mit hoher Tg (Glasübergangstemperatur) mit
- einer Tg zwischen 50 °C und 120 °C, gemessen gemäß ASTM-Norm D3418 (1999),
- einem Gehalt an aliphatischen Protonen größer oder gleich 95 %, gemessen mittels ¹H-NMR unter den im Abschnitt "2 - Weichmachersystem" definierten Bedingungen, und
- einer zahlenmittleren Molmasse (Mn) kleiner oder gleich 800 g/mol, gemessen mittels Größenausschlusschromatographie (SEC) unter den in Abschnitt "2 - Weichmachersystem" definierten Bedingungen.

2. Kautschukzusammensetzung nach Anspruch 1, wobei die Ethyleneinheiten mindestens 50 und höchstens 95 Mol-%, vorzugsweise 65 % bis 90 %, der Monomereinheiten des Copolymers ausmachen.

3. Kautschukzusammensetzung nach einem der vorhergehenden Ansprüche, wobei in der Formel (I) R für eine aliphatische Kohlenwasserstoffkette mit 6 bis 16 Kohlenstoffatomen steht.

4. Kautschukzusammensetzung nach einem der vorhergehenden Ansprüche, wobei es sich bei dem 1,3-Dien der Formel (I) um Myrcen oder β-Farnesen handelt.

5. Kautschukzusammensetzung nach einem der vorhergehenden Ansprüche, wobei es sich bei dem hochgesättigten Dienelastomer um ein Terpolymer von Ethylen, einem ersten 1,3-Dien der Formel (I), CH₂=CR-CH=CH₂ (I), wobei das Symbol R für eine Kohlenwasserstoffkette mit 3 bis 20 Kohlenstoffatomen steht, und einem zweiten 1,3-Dien mit 4 bis 6 Kohlenstoffatomen handelt.

6. Kautschukzusammensetzung nach dem vorhergehenden Anspruch, wobei es sich bei dem zweiten 1,3-Dien um 1,3-Butadien oder Isopren, vorzugsweise 1,3-Butadien, handelt.

7. Kautschukzusammensetzung nach dem vorhergehenden Anspruch, wobei es sich bei dem hochgesättigten Dienelastomer um ein Terpolymer von Ethylen, einem 1,3-Dien, das aus Myrcen und β-Farnesen ausgewählt ist, und 1,3-Butadien handelt.

8. Kautschukzusammensetzung nach einem der vorhergehenden Ansprüche, wobei der Gehalt an hochgesättigtem Dienelastomer in einem Bereich von 60 bis 100 phe, vorzugsweise 80 bis 100 phe, besonders bevorzugt von 90 bis 100 phe, variiert.

9. Zusammensetzung nach einem der vorhergehenden Ansprüche, wobei der Gehalt an Kohlenwasserstoffharz mit hoher Tg in einem Bereich von 10 bis 120 phe, vorzugsweise von 20 bis 110 phe, liegt.

10. Zusammensetzung nach einem der vorhergehenden Ansprüche, wobei das Kohlenwasserstoffharz mit hoher Tg eine Tg zwischen 55 °C und 110 °C, weiter bevorzugt zwischen 60 °C und 100 °C, aufweist.

11. Zusammensetzung nach einem der vorhergehenden Ansprüche, wobei das Kohlenwasserstoffharz mit hoher Tg eine zahlenmittlere Molmasse größer oder gleich 250 g/mol und kleiner oder gleich 600 g/mol aufweist.

12. Zusammensetzung nach einem der vorhergehenden Ansprüche, wobei das Kohlenwasserstoffharz mit hoher Tg einen Gehalt an aliphatischen Protonen, gemessen mittels NMR (standardisierte Methode), von mindestens 99 % aufweist.

13. Zusammensetzung nach einem der vorhergehenden Ansprüche, wobei der verstärkende Füllstoff als hauptsächlichen verstärkenden Füllstoff eine Kieselsäure aufweist.

14. Zusammensetzung nach einem der vorhergehenden Ansprüche, wobei der Gehalt an Kieselsäure in einem Bereich von 50 bis 160 phe liegt.

15. Luftreifen oder Vollreifen, umfassend eine Zusammensetzung nach einem der vorhergehenden Ansprüche.

## Claims

1. Rubber composition based on at least
- an elastomer matrix predominantly comprising a highly saturated diene elastomer, which highly saturated diene elastomer is a copolymer of ethylene and a 1,3-diene of formula (I),
CH₂=CR-CH=CH₂ (I)
the symbol R representing a hydrocarbon chain having from 3 to 20 carbon atoms,
and optionally of another 1,3-diene, in which the ethylene units comprise at least 50 mol% of the monomer units of the copolymer,
- a reinforcing filler,
- a vulcanization system, and
- a plasticizing system comprising a high-Tg (glass transition temperature) hydrocarbon resin, which is optionally hydrogenated, having
- a Tg of between 50°C and 120°C measured according to the ASTM D3418 (1999) standard,
- an aliphatic proton content of greater than or equal to 95% measured by ¹H NMR under the conditions defined in section "2 - Plasticizing System", and
- a number-average molar mass (Mn) of less than or equal to 800 g/mol measured by size exclusion chromatography (SEC) under the conditions defined in section "2 - Plasticizing System".

2. Rubber composition according to Claim 1, in which the ethylene units represent at least 50 mol% and at most 95 mol%, preferably from 65 mol% to 90 mol%, of the monomer units of the copolymer.

3. Rubber composition according to either one of the preceding claims, in which, in formula (I), R represents an aliphatic hydrocarbon chain having from 6 to 16 carbon atoms.

4. Rubber composition according to any one of the preceding claims, in which the 1,3-diene of formula (I) is myrcene or β-farnesene.

5. Rubber composition according to any one of the preceding claims, in which the highly saturated diene elastomer is a terpolymer of ethylene, a first 1,3-diene of formula (I), CH₂=CR-CH=CH₂ (I) the symbol R representing a hydrocarbon chain having 3 to 20 carbon atoms, and a second 1,3-diene having 4 to 6 carbon atoms.

6. Rubber composition according to the preceding claim, in which the second 1,3-diene is 1,3-butadiene or isoprene, preferably 1,3-butadiene.

7. Rubber composition according to the preceding claim, in which the highly saturated diene elastomer is a terpolymer of ethylene, a 1,3-diene selected from myrcene and β-farnesene, and 1,3-butadiene.

8. Rubber composition according to any one of the preceding claims, in which the content of highly saturated diene elastomer varies within a range extending from 60 to 100 phr, preferably from 80 to 100 phr, very preferentially from 90 to 100 phr.

9. Composition according to any one of the preceding claims, in which the content of high-Tg hydrocarbon resin is within a range extending from 10 to 120 phr, preferably from 20 to 110 phr.

10. Composition according to any one of the preceding claims, in which the high-Tg hydrocarbon resin has a Tg of between 55°C and 110°C, more preferentially between 60°C and 100°C.

11. Composition according to any one of the preceding claims, in which the high-Tg hydrocarbon resin has a number-average molar mass greater than or equal to 250 g/mol and less than or equal to 600 g/mol.

12. Composition according to any one of the preceding claims, in which the high-Tg hydrocarbon resin has an aliphatic proton content measured by NMR (standardized method) of at least 99%.

13. Composition according to any one of the preceding claims, in which the reinforcing filler comprises a silica as the predominant reinforcing filler.

14. Composition according to any one of the preceding claims, in which the content of silica is within a range extending from 50 to 160 phr.

15. Pneumatic or non-pneumatic tyre comprising a composition according to any one of the preceding claims.
